# EUROPEAN PATENT APPLICATION

(11) **EP 1 384 620 A1**
(43) Date of publication of application: **28.01.2004**
(21) Application number: 03425481.3
(22) Date of filing: 18.07.2003
(51) Int. Cl.: B60P 3/12, B60P 3/07, B60P 3/077

(54) **Motor vehicle equipped for recovering and transporting vehicles, particluarly two-wheel vehicles**

(30) Priority: 22.07.2002 IT RM20020387
(71) Applicant: Prontomoto s.r.l., 00161 Roma (IT)
(72) Inventor: Barbera, Massimiliano, 00137 Roma (IT); Celon, Maurizio, 00137 Roma (IT); De Luca, Salvatore, 00176 Roma (IT); Buongiorno, Marco, 00137 Roma (IT)
(74) Representative: Iannone, Carlo Luigi

(57) **Abstract**

The invention relates to a motor vehicle equipped for recovering and transporting vehicles, particularly two-wheel vehicles, comprising at least a structure (3, 4, 5) for blocking a wheel of a vehicle, and means (7, 8) for fixing the body of the same vehicle.

## Description

The present invention relates to a motor vehicle equipped for recovering and transporting vehicles, particularly two-wheel vehicles.

More specifically, the invention concerns a motor vehicle of the above kind, on which means are provided allowing loading on board vehicles, particularly motorcycles, and their transportation under maximum safe conditions.

In the following the specification will be particularly addressed to the use of the motor vehicle according to the invention for recovering and transporting motor vehicles, but said description cannot be interpreted as limiting the scope of the same invention.

As it well known to everyone, the use of motor vehicles, scooter and like, mainly in big cities, is always more diffused, both due to the passion, but mainly for convenience reasons with respect to the traffic and parking problems.

Always growing number of motor vehicles circulating on the roads obviously increased the rescue request in case of more or less serious failure, even in case of a simple puncture of the tyre, and in case of accident.

At present, no specific means exist, prepared and homologated for recovering two-wheel vehicles. In case of need, the solution to the problem remains to the single person or organisation, that must organise themselves time by time.

Thus, motor vehicles can be noted that are loaded on vans or pickup trucks, without any respect of the minimum safe conditions both for those making the transportation and for those that are on the road along the path followed by the means.

Furthermore, in many cases, solutions now adopted involve a possible, or even sure, damaging of the transportation means.

The sole means presently known for transportation of two-wheel vehicles are tow carriages.

In this situation, it is well evident the needing of having at disposal an motor vehicle as suggested according to the present invention, allowing to transport under safety conditions any kind of vehicle, particularly any two-wheel vehicle.

Further object of the present invention is that of providing a solution allowing to transport even more than one two-wheel vehicle each time, without any risk for safety both of people and of the same vehicles.

Still another object of the present invention is that of providing an motor vehicle of the above kind that can be positively homologated by the Authority, and thus used for third party recovering, or on behalf of the competent authority.

It is therefore specific object of the present invention a motor vehicle equipped for recovering and transporting vehicles, particularly two-wheel vehicles, comprising at least a structure for blocking a wheel of a vehicle, and means for fixing the body of the same vehicle.

Preferably, according to the invention, it is provided a plurality of structures for blocking a wheel of a vehicle, the corresponding number of vehicles being placed side by side or otherwise placed within the motor vehicle.

Particularly, said structures for blocking a wheel of a vehicle are applied to the front wheel of the vehicle.

Always according to the invention, said means for fixing the body of the vehicle can be comprised of elastic rope means, having a fixing element coupling with one of a plurality of corresponding fixing elements on the motor vehicle.

Preferably, according to the invention, said at least one structure for blocking a wheel of a vehicle provides a fixed jaw and a movable jaw. Said movable jaw being movable by a mechanical, hydraulic, pneumatic, electric, etc. crank system.

Particularly, said crank can be replaceable.

Still according to the invention, said at least one structure can be movable in a transverse direction, sliding along a transverse guide.

According to the invention, to load said vehicles, said motor vehicle can provide an winch and a suitable footboard.

The present invention will be now described, for illustrative but not limitative purposes, according to its preferred embodiments, with particular reference to the figures of the enclosed drawings, wherein:

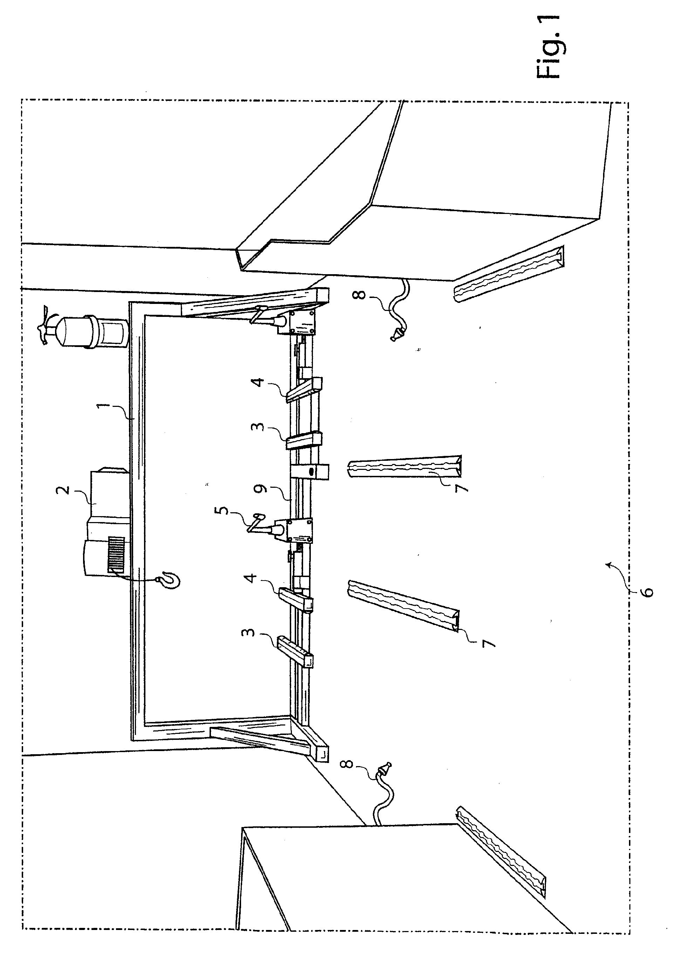

figure 1 is a perspective view of the inner part of an motor vehicle according to the present invention; and
figure 2 shows a particular of the motor vehicle of figure 1.

Observing now both figures of the enclosed drawings, it can be noted the inner part of a motor vehicle according to the invention, providing a structure 1 for supporting two-wheel vehicles, on which an winch 2 (that is not part of the invention, since it is a standard device) is mounted for lifting the vehicle by a rear footboard, not shown, on which the vehicle can be positioned.

In the embodiment shown in the figures, two different means are provided for supporting two two-wheel vehicles side by side, but it is well evident that said arrangement cannot be considered as limiting the scope of the invention.

Each one of the two structures for supporting the two-wheel vehicle has a jaw pair 3, 4, movable by a crank 5, to allow their adjustment with respect to the different dimensions of the vehicle wheels.

On the plane 6 of the motor vehicle, rods 7 are provided that, in co-operation with the elastic ropes 8, allow the blocking of the vehicle at the rear, after having tightened the jaws 3, 4.

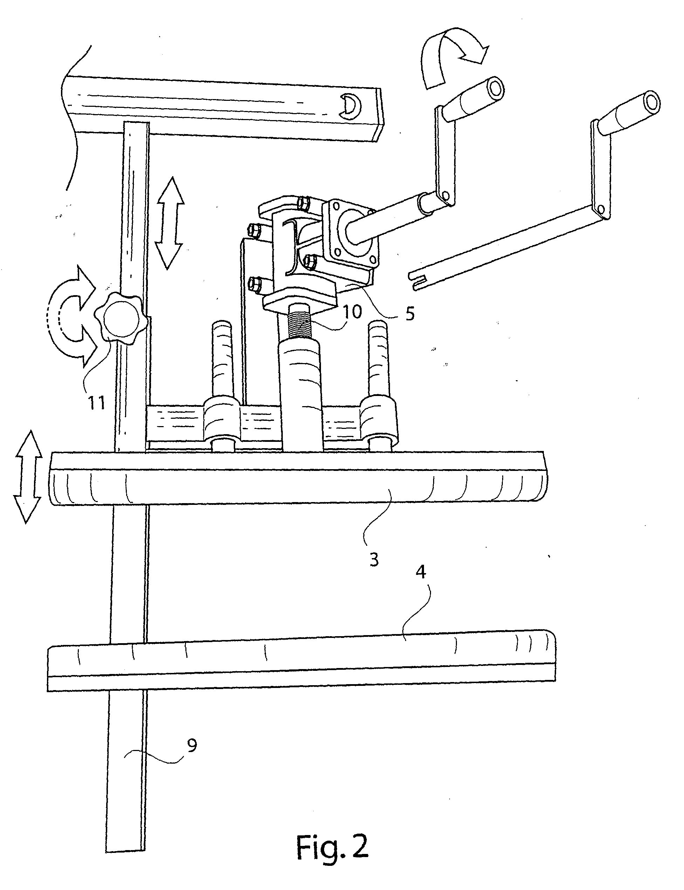

Observing now in particular figure 2, it is possible to particularly observe a structure for blocking a front wheel of a motor vehicle. Said structure provides the crank 5, that can be replaced by a longer crank 5', the jaws 3, 4, one (3) of which slides along the guide 9, and the other one (4) is fixed.

Between the crank 5 and the jaw 3, a worm screw 10 is provided.

In case dimensions of one of the two motor vehicles supported by the motor vehicle according to the invention are bigger than in the standard cases, the invention provides that it is possible to make all the blocking structure sliding laterally along the guide 9, acting of the knob 11, loosening it, thus being possible the displacement of the structure, and then tightening it again.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Motor vehicle equipped for recovering and transporting vehicles, particularly two-wheel vehicles, **characterised in that** it comprises at least a structure for blocking a wheel of a vehicle, and means for fixing the body of the same vehicle.

2. Equipped motor vehicle according to claim 1,
**characterised in that** it is provided a plurality of structures for blocking a wheel of a vehicle, the corresponding number of vehicles being placed side by side or otherwise placed within the motor vehicle.

3. Equipped motor vehicle according to one of the preceding claims, **characterised in that** said structures for blocking a wheel of a vehicle are applied to the front wheel of the vehicle.

4. Equipped motor vehicle according to one of the preceding claims, **characterised in that** said means for fixing the body of the vehicle are comprised of elastic rope means, having a fixing element coupling with one of a plurality of corresponding fixing elements on the motor vehicle.

5. Equipped motor vehicle according to one of the preceding claims, **characterised in that** said at least one structure for blocking a wheel of a vehicle provides a fixed jaw and a movable jaw. Said movable jaw being movable by a mechanical, hydraulic, pneumatic, electric, etc. crank system.

6. Equipped motor vehicle according to one of the preceding claims, **characterised in that** said crank is replaceable.

7. Equipped motor vehicle according to one of the preceding claims, **characterised in that** said at least one structure is movable in a transverse direction, sliding along a transverse guide.

8. Equipped motor vehicle according to one of the preceding claims, **characterised in that** to load said vehicles, said motor vehicle provides an winch and a suitable footboard.

9. Equipped motor vehicle according to each one of the preceding claims, substantially as illustrated and described.
